# EUROPÄISCHE PATENTSCHRIFT

(11) **EP 2 400 215 B1**
(45) Veröffentlichungstag und Bekanntmachung des Hinweises auf die Patenterteilung: **13.11.2013**
(21) Anmeldenummer: 11168912.1
(22) Anmeldetag: 07.06.2011
(51) Int. Cl.: F23D 11/40, F23D 11/44, F23L 15/04

(54) **Ölvormischbrenner mit Verbrennungsluft-Vorwärmung**
Oil pre-mix burner with combustion air preheating
Brûleur à prémélange à l'huile avec du prechauffage de l'air de combustion

(30) Priorität: 25.06.2010 DE 102010025107
(43) Veröffentlichungstag der Anmeldung: 28.12.2011
(73) Patentinhaber: Robert Bosch GmbH, 70442 Stuttgart (DE)
(72) Erfinder: Rausch, Rainer, 36304 Alsfeld (DE)

(56) Entgegenhaltungen:
- EP-A1- 1 845 307
- WO-A1-97/49952
- WO-A2-2009/130155
- DE-A1- 19 625 217

## Beschreibung

Die Erfindung betrifft einen Ölvormischbrenner nach dem Patentanspruch 1.

Derartige Ölvormischbrenner besitzen ein zylindrisches Brennelement mit einer Brenneroberfläche auf der äußeren Mantelfläche. Um eine zentrale Öleinspritzvorrichtung, bisher üblicherweise eine Öldüse, befindet sich in der Regel eine Verteilkammer für den entstehenden Ölnebel, damit dieser gleichmäßig von innen her die Brenneroberfläche erreicht. In die Verteilkammer gelangt Verbrennungsluft über mindestens eine Einströmöffnung im Bereich der Öldüse, welche bei vielen bekannten Ausführungen an einem Düsenstock mit Ölvorwärmer befestigt ist. Stromaufwärts der Öldüse befindet sich ein Verbrennungsluftkanal mit Verbindung zu einem Gebläse. Für eine besonders feine Ölverteilung und -dosierung kommen auch aus der Motorentechnik bekannte Öleinspritzventile bei Ölvormischbrennern zum Einsatz.

Insbesondere bei Gasbrennern, die modulierend betrieben werden, also bei denen der Leistungsbereich zwischen einem geringen Anteil der Maximalleistung und der Maximalleistung gesteuert werden kann, haben sich die sogenannten Vormischbrenner durchgesetzt. Bei diesen Brennern wird der Brennstoff und die zu dessen Verbrennung erforderliche Verbrennungsluft von der Flamme örtlich getrennt vermischt und dann verbrannt. Dazu wird meist ein zylindrisches Brennelement als Flammenhalter eingesetzt, der für das Brennstoff-/Luft-Gemisch durchlässig ist und einen Innenraum umschließt, dem das Brennstoff-/Luft-Gemisch zugeführt wird. Mit dieser Technologie lassen sich kleine Flammen mit guten Abgaswerten, relativ kleine Flammenhalter und große Modulationsbereiche verwirklichen.

Das Grundprinzip eines Ölvormischbrenners ist die Vermischung von fein zerstäubtem Öl mit vorgewärmter Luft. Durch dieses Prinzip ist es möglich, dass sich zum Beispiel eine sogenannte kalte Flamme bildet, so dass der Brennstoff über eine Oberfläche verbrannt werden kann. Die Oberflächenverbrennung ist allerdings auch ohne kalte Flamme möglich. Generell ist das Erwärmen von Luft auf Grund der geringen Wärmekapazität relativ schwierig, weil dazu entweder ein effektiver Wärmeübergang über eine Wand auf den Luftstrom und/oder hohe Wandtemperaturen notwendig sind.

Ein Ölvormischbrenner ist zum Beispiel aus der DE 10 2006 000 174 A1 bekannt. Dabei wird die Tatsache genutzt, dass heiße Luft das Öl verdampft und somit ein Gasgemisch gebildet werden kann, welches wie bei einem Gas-Vormischbrenner durch den Flammhalter hindurch tritt und abbrennt. Durch die Zumischung von Abgas zur Verbrennungsluft zur Luftvorwärmung wird zudem die Bildung von Stickoxiden verringert und dadurch soll sich auch das Anlaufverhalten verbessern, weil der Betriebspunkt relativ schnell erreicht wird. Die Verbrennungsluft wird zur Wärmeaufnahme durch eine mindestens abschnittsweise und freitragend über eine Brenneroberfläche ragende, von der Brennerflamme beabstandete Leiteinrichtung geführt und in einer Düse in der Leiteinrichtung beschleunigt, damit das Abgas aus dem Brennraum angesaugt und mit der Luft vermischt werden kann.

Auch die DE 26 43 293 A1 beschreibt einen solchen Kanal für die Verbrennungsluft, der als Zylinder um den hinteren Bereich eines Brennstabes bzw. Brennelementes angeordnet ist. Da für die Vermischung und die Verbrennungsreaktion ein bestimmter Mindestbrennelementdurchmesser erforderlich ist, kann dieser Aufbau allerdings zu einem gegenüber bekannten Bauformen insgesamt relativ großen Feuerraum führen.

Aus der DE 10 2008 020 424 B4 ist ein Ölvormischbrenner bekannt, bei dem das Brennelement in oder unterhalb der Brenneroberfläche einen integrierten Luftwärmetauscher für die Vorwärmung der Verbrennungsluft aufweist. Dabei besitzt der rohrbündelähnliche Luftwärmetauscher ausschließlich Einzelrohre auf einem einzigen Teilkreis sowie eine Verteileinrichtung, alles direkt unterhalb der Brenneroberfläche. Die Verteileinrichtung dazu bildet zwischen einer zur Brenneroberfläche gerichteten Wand und einer Innenwand mindestens einen integrierten Kanal als Luftwärmetauscher aus und ist mit einer Vielzahl von Durchtrittsöffnungen für das zu verbrennende Öl-/Luft-Gemisch versehen, welche den Kanal durchgreifen und luftseitig abgedichtet sind.

Das Dokument WO9749952 A beschreibt einen Ölvormischbrenner mit einer Brenneroberfläche auf der äußeren Mantelfläche eines Brennelements mit einer Verteilkammer und einer zentralen Öleinspritzvorrichtung und einem stromaufwärts angeschlossenen Verbrennungsluftkanal. Der integrierte Verbrennungsluftwärmetauscher besteht aus Wärmetauscherrohren oberhalb und unterhalb der Brenneroberfläche. Die Wärmetauscherrohre unterhalb der Brenneroberfläche sind gleichmäßig über den Umfang des Brennelementes verteilt und jeweils auf einem gemeinsamen Teilkreis angeordnet. Oberhalb der Brenneroberfläche befindet sich ein spiralförmig um die Oberfläche gewickeltes Wärmetauscherrohr.

Der Erfindung liegt die Aufgabe zugrunde, bei einem Ölvormischbrenner die Verbrennungsqualität und die Robustheit, besonders im Hinblick auf Modulationsfähigkeit, zu optimieren.

Erfindungsgemäß wurde dies mit den Merkmalen des Patentanspruches 1 gelöst. Vorteilhafte Weiterbildungen sind den Unteransprüchen zu entnehmen.

Der erfindungsgemäße Ölvormischbrenner ist dadurch gekennzeichnet, dass das Brennelement einen integrierten Luftwärmetauscher aufweist, welcher aus Wärmetauscherroh- ren für die Vorwärmung der Verbrennungsluft oberhalb und unterhalb der Brenneroberfläche besteht, wobei die Wärmetauscherrohre des Luftwärmetauschers oberhalb und unterhalb der Brenneroberfläche gleichmäßig über den Umfang des Brennelementes verteilt und jeweils auf einem gemeinsamen Teilkreis angeordnet sind, wobei mindestens drei Wärmetauscherrohre oberhalb der Brenneroberfläche vorgesehen sind. Eine beliebige größere Rohr-Anzahl ist denkbar. Sie sollte so gewählt werden, dass eine kreissymmetrische Anordnung über den Umfang gut möglich ist. Dies bringt neben einem gleichmäßigen Strömungsbild auch ein vorteilhaftes Verhalten im Hinblick auf Temperaturvergleichmäßigung und damit möglicherweise verbundene besser verteilte Spannungen in der Anordnung

Dazu erstrecken sich die Wärmetauscherrohre des Luftwärmetauschers jeweils achsparallel über die Länge des Brennelementes.

In einer bevorzugten Ausführung sind die Enden der Wärmetauscherrohre des Luftwärmetauschers oberhalb und unterhalb der Brenneroberfläche jeweils an einer gemeinsamen Flanschplatte fixiert.

Weiterhin ist es vorteilhaft, dass die Wärmetauscherrohre des Luftwärmetauschers mindestens im mittleren Bereich eine Oberflächenstrukturierung zur Turbulenzerzeugung und Erhöhung des Wärmeübergangs aufweisen. Diese Oberflächenstrukturierung besteht vorzugsweise aus einer spiralförmigen Rillenstruktur oder aus Prägungen. Ziel ist es dabei, die Strömung im wandnahen Bereich immer wieder abreißen zu lassen und somit einen intensiven Wärmeübergang zu ermöglichen.

In einer bevorzugten Ausführungsform ist am freien Ende des Brennelementes ein abgeschlossener Umlenkraum angeordnet, dessen Innenwand den Innenraum des Brennelementes begrenzt und die zugeordneten Enden der Wärmetauscherrohre aufnimmt. Der Umlenkraum ist gleichzeitig die stirnseitige Verbindungskomponente für das Brennelement.

Weiterhin sind die oberhalb der Brenneroberfläche angeordneten Wärmetauscherrohre an den Verbrennungsluftkanal angeschlossen, werden von der kühlen Verbrennungsluft aus dem Gebläse durchströmt und außen direkt von der Flamme beaufschlagt, so dass sich die Luft schnell aufheizt. Stirnseitig münden die äußeren Wärmetauscherrohre dann in den Umlenkraum ein.

Vorzugsweise münden die unterhalb der Brenneroberfläche angeordneten Wärmetauscherrohre auf einem durchmesserkleineren Teilkreis als die oberhalb der Brenneroberfläche angeordneten Wärmetauscherrohre aus dem Umlenkraum aus, führen die Verbrennungsluft unterhalb der Brenneroberfläche entlang und setzen diese der Strahlungswärme aus. Außerdem wird dort auch von den betreffenden, aufgeheizten Wärmetauscherrohren der Innenraum des Brennelementes bzw. das dort in Richtung Brenneroberfläche strömende Öl-/Luft-Gemisch aufgeheizt und dabei großflächig mit Strahlungswärme beaufschlagt. Im gegenüberliegenden Endbereich münden die inneren Wärmetauscherrohre in einen zur zentralen Öleinspritzvorrichtung hin offenen Raum ein.

In einer weiteren vorteilhaften Ausführungsform ist eine regelbare Direktströmung von Verbrennungsluft aus dem Verbrennungsluftkanal in den Raum um die zentrale Öleinspritzvorrichtung vorgesehen. Dabei wird die Verbrennungsluftzufuhr nach gemessenen Temperaturen, wie Oberflächentemperatur am Brennelement, Öl-/Luft-Gemischtemperatur im Brennelement, Verbrennungslufttemperatur im Bereich der zentralen Öleinspritzvorrichtung und/oder Bauteiltemperaturen von Brennelement und Öleinspritzvorrichtung, geregelt.

Alternativ oder ergänzend dazu kann auch die Durchströmung der Wärmetauscherrohre mit einer Regelvorrichtung im Eintrittsbereich der Verbrennungsluft aus dem Verbrennungsluftkanal in die Wärmetauscherrohre regelbar sein. Dabei wird die Verbrennungsluftzufuhr ebenso nach gemessenen Temperaturen, wie vorstehend aufgeführt, geregelt.

So lassen sich Startverhalten und auch Verbrennungsqualität über die Anpassung der Verbrennungslufttemperatur optimieren. Beim Start, und somit bei noch kalten Wärmetauscheroberflächen, kann die Durchströmung des Wärmetauschers zur Luftvorwärmung kurzzeitig unterbunden oder minimiert werden. Oder es wird mit einer Direktströmung zum Beispiel elektrisch vorgewärmte Verbrennungsluft in den Bereich um die zentrale Öleinspritzvorrichtung geleitet, um die Zündfähigkeit des Öl-/Luft-Gemisches in der Startphase über das Verdampfungsverhalten zu verbessern.

Vorzugsweise dienen die Wärmetauscherrohre des Luftwärmetauschers als Träger und/oder Fixierung für die Brenneroberfläche und der Abstand der unterhalb der Brenneroberfläche angeordneten Wärmetauscherrohre des Luftwärmetauschers zueinander ist für die Dosierung und Verteilung des Öl-/Luft-Gemisches direkt unterhalb der Brenneroberfläche wichtig. Daher ist eine durchgehende Rohrverteilung mit relativ engen Spalten zwischen den Rohren für die Anordnung der unterhalb der Brenneroberfläche befindlichen Wärmetauscherrohre anzustreben.

Mit den erfindungsgemäßen Maßnahmen werden bei einem Ölvormischbrenner sowohl die Verbrennungsqualität als auch die Robustheit verbessert. Insbesondere für modulierenden Betrieb ist die erfindungsgemäße Anordnung mit dem integrierten Luftwärmetauscher vorteilhaft. Dies trifft für Brenner mit einem zylindrischen Brennelement genauso zu wie für einen nicht erfindungsgemäßen Flächenbrenner mit einer horizontalen Brenneroberfläche und dem Aufbauprinzip in flächiger Form, ebenfalls mit einer dichter gepackten Rohrlage unterhalb der Brenneroberfläche und einem Teil paralleler Wärmetauscherrohre oberhalb davon, im Bereich der Flamme.

Da beim erfindungsgemäßen Brenneraufbau die Flamme an bzw. in der Brenneroberfläche brennt, kann direkt Energie aus der Flamme ausgekoppelt und zur Erwärmung der Verbrennungsluft genutzt werden. Somit kann eine elektrische Luftvorwärmung während des stationären Brenner-Betriebszustandes und somit der vollen Wirksamkeit des Luftwärmetauschers entfallen.

Ein bedeutender Vorteil der erfindungsgemäß integrierten Luftvorwärmungsfunktion ist, dass mit zunehmender Brenneroberfläche, beispielsweise bei einem Brennelement für größere Leistungsbereiche, auch die Wärmetauscheroberfläche in gleichem Maße wächst. Damit bleibt die angestrebte Lufttemperatur konstant. Außer als am Brennelement selbst, sind somit an der Peripherie keine konstruktiven Änderungen für die Darstellung unterschiedlicher Brenner-Leistungsgrößen nötig. Der sonstige Brenneraufbau bleibt genauso erhalten wie Anforderungen an den umgebenden Feuerraum.

Die Zeichnung stellt ein Ausführungsbeispiel der Erfindung dar. Es zeigt einen Ölvormischbrenner mit einem zylindrischen Brennelement und einem Luftwärmetauscher:

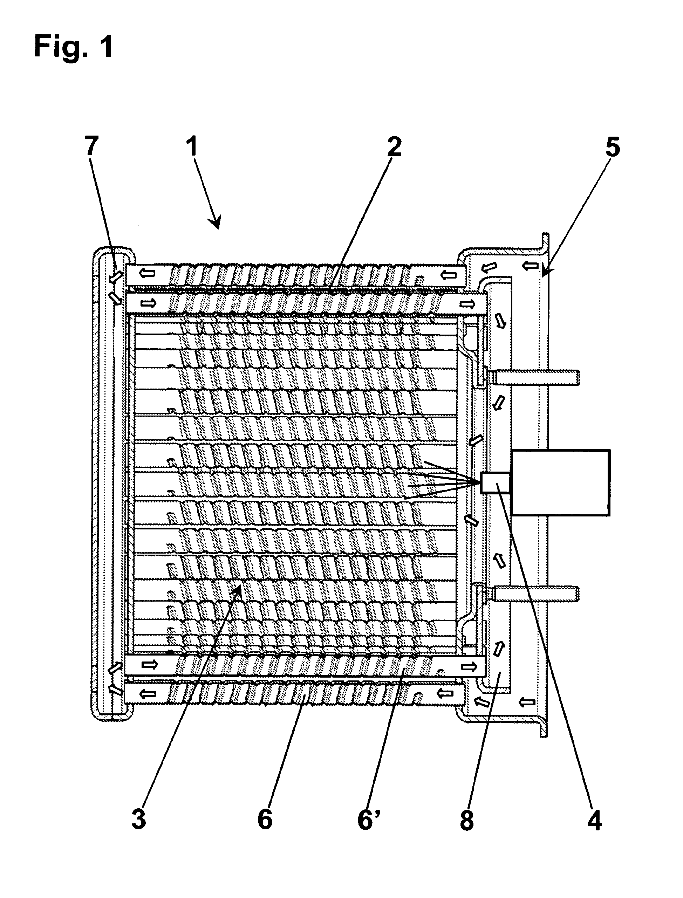

Fig. 1: in einem vertikalen Längsschnitt,

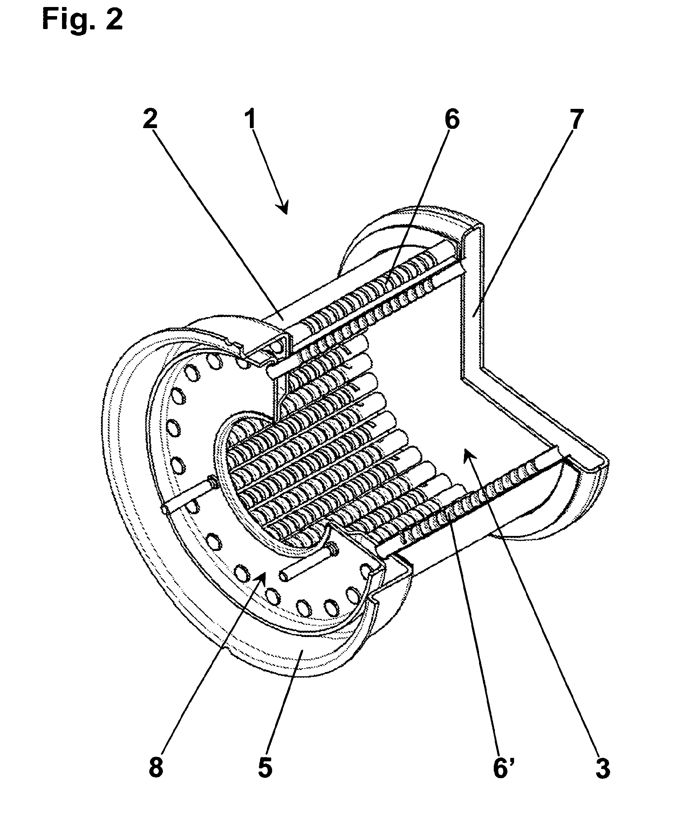

Fig. 2: in einer perspektivischen Schnittdarstellung und

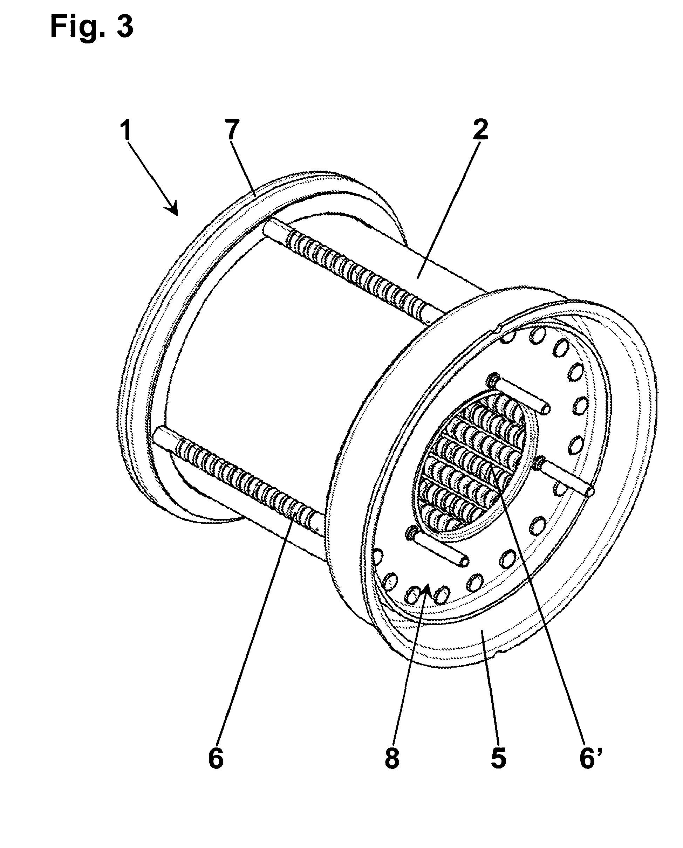

Fig. 3: in einer perspektivischen Gesamtansicht.

Der Ölvormischbrenner besteht im Wesentlichen aus einem zylindrischen Brennelement 1, mit einer Brenneroberfläche 2, vorzugsweise einem Gewebe, auf der äußeren Mantelfläche, einer Verteilkammer 3 unterhalb der Brenneroberfläche 2, einer zentralen Öleinspritzvorrichtung 4, und einem an ein stromaufwärts angeordnetes Gebläse angeschlossenen Verbrennungsluftkanal 5.

Das Brennelement 1 besitzt einen integrierten Luftwärmetauscher für die Vorwärmung der Verbrennungsluft, welcher aus oberhalb der Brenneroberfläche 2 angeordneten Wärmetauscherrohren 6 sowie unterhalb derselben verlaufenden Wärmetauscherrohren 6' für die Vorwärmung der Verbrennungsluft besteht.

Im gezeigten Ausführungsbeispiel sind die Wärmetauscherrohre 6, 6' des Luftwärmetauschers gleichmäßig über den Umfang des Brennelementes 1 verteilt und jeweils auf einem gemeinsamen Teilkreis angeordnet, wobei sich oberhalb der Brenneroberfläche 2 vier Wärmetauscherrohre 6 befinden. Am freien Ende des Brennelementes 1 ist ein abgeschlossener Umlenkraum 7 angeordnet, dessen Innenwand alle Enden der Wärmetauscherrohre 6, 6' aufnimmt.

Vom Verbrennungsluftkanal 5 aus gelangt die vorzuwärmende Luft zunächst in die oberhalb der Brenneroberfläche 2 angeordneten Wärmetauscherrohre 6 und dann in den Umlenkraum 7. Dort erfolgt ein Überströmen in die unterhalb der Brenneroberfläche 2 angeordneten Wärmetauscherrohre 6'. An deren Ausmündung im gegenüberliegenden Endbereich gelangt dann die vorgewärmte Luft in einen zur zentralen Öleinspritzvorrichtung 4 hin offenen und diese umgebenden Raum 8 und somit direkt in die Mischzone.

## Patentansprüche

1. Ölvormischbrenner mit einem Brennelement (1), einer Brenneroberfläche (2) auf der äußeren Mantelfläche, einer Verteilkammer (3) unterhalb der Brenneroberfläche (2), einer zentralen Öleinspritzvorrichtung (4), und einem an ein stromaufwärts angeordnetes Gebläse angeschlossenen Verbrennungsluftkanal (5),
wobei das Brennelement (2) einen integrierten Luftwärmetauscher aufweist, welcher aus Wärmetauscherrohren (6, 6') für die Vorwärmung der Verbrennungsluft oberhalb und unterhalb der Brenneroberfläche (2) besteht, wobei die Wärmetauscherrohre (6, 6') des Luftwärmetauschers oberhalb und unterhalb der Brenneroberfläche (2) gleichmäßig über den Umfang des Brennelementes (1) verteilt und jeweils auf einem gemeinsamen Teilkreis angeordnet sind, wobei mindestens drei Wärmetauscherrohre (6) oberhalb der Brenneroberfläche (2) vorgesehen sind.

2. Ölvormischbrenner nach Anspruch 1,
**dadurch gekennzeichnet, dass** sich die Wärmetauscherrohre (6, 6') des Luftwärmetauschers jeweils achsparallel über die Länge des Brennelementes (1) erstrecken.

3. Ölvormischbrenner nach den Ansprüchen 1 oder 2,
**dadurch gekennzeichnet, dass** die Enden der Wärmetauscherrohre (6, 6') des Luftwärmetauschers oberhalb und unterhalb der Brenneroberfläche (2) jeweils an einer gemeinsamen Flanschplatte fixiert sind.

4. Ölvormischbrenner nach einem der Ansprüche 1 bis 3,
**dadurch gekennzeichnet, dass** die Wärmetauscherrohre (6, 6') des Luftwärmetauschers mindestens im mittleren Bereich eine Oberflächenstrukturierung zur Turbulenzerzeugung und Erhöhung des Wärmeübergangs aufweisen.

5. Ölvormischbrenner nach Anspruch 4,
**dadurch gekennzeichnet, dass** die Oberflächenstrukturierung der Wärmetauscherrohre (6, 6') aus einer spiralförmigen Rillenstruktur besteht.

6. Ölvormischbrenner nach einem der Ansprüche 1 bis 5,
**dadurch gekennzeichnet, dass** am freien Ende des Brennelementes (1) ein abgeschlossener Umlenkraum (7) angeordnet ist, dessen Innenwand den Innenraum des Brennelementes (1) begrenzt und die zugeordneten Enden der Wärmetauscherrohre (6, 6') aufnimmt.

7. Ölvormischbrenner nach Anspruch 6,
**dadurch gekennzeichnet, dass** die oberhalb der Brenneroberfläche (2) angeordneten Wärmetauscherrohre (6) an den Verbrennungsluftkanal (5) angeschlossen sind, von Verbrennungsluft aus dem Gebläse durchströmt werden, außen von der Flamme beaufschlagt sind und stirnseitig in den Umlenkraum (7) einmünden.

8. Ölvormischbrenner nach den Ansprüchen 6 oder 7,
**dadurch gekennzeichnet, dass** die unterhalb der Brenneroberfläche (2) angeordneten Wärmetauscherrohre (6') auf einem durchmesserkleineren Teilkreis als die oberhalb der Brenneroberfläche (2) angeordneten Wärmetauscherrohre (6) aus dem Umlenkraum (7) ausmünden und im gegenüberliegenden Endbereich in einen zur zentralen Öleinspritzvorrichtung (4) hin offenen Raum (8) einmünden.

9. Ölvormischbrenner nach einem der Ansprüche 1 bis 8,
**dadurch gekennzeichnet, dass** die Wärmetauscherrohre (6, 6') des Luftwärmetauschers als Träger und/oder Fixierung für die Brenneroberfläche (2) dienen.

10. Ölvormischbrenner nach einem der Ansprüche 1 bis 9,
**dadurch gekennzeichnet, dass** der Abstand der unterhalb der Brenneroberfläche (2) angeordneten Wärmetauscherrohre (6') des Luftwärmetauschers zueinander zur Dosierung und Verteilung des Öl-/Luft-Gemisches direkt unterhalb der Brenneroberfläche (2) dient.

## Claims

1. Oil pre-mix burner with a combustion element (1), with a burner surface (2) on the outer surface area, with a distribution chamber (3) underneath the burner surface (2), with a central oil injection device (4) and with a combustion air duct (5) connected to a blower arranged upstream, the combustion element (1) having an integrated air heat exchanger which consists of heat exchanger tubes (6, 6') for preheating the combustion air above and below the burner surface (2), the heat exchanger tubes (6, 6') of the air heat exchanger above and below the burner surface (2) being distributed uniformly over the circumference of the combustion element (1) and in each case being arranged on a common reference circle, at least three heat exchanger tubes (6) being provided above the burner surface (2).

2. Oil pre-mix burner according to Claim 1, **characterized in that** the heat exchanger tubes (6, 6') of the air heat exchanger extend in each case axially parallel over the length of the combustion element (1).

3. Oil pre-mix burner according to either one of Claims 1 and 2, **characterized in that** the ends of the heat exchanger tubes (6, 6') of the air heat exchanger are fixed above and below the burner surface (2) in each case to a common flange plate.

4. Oil pre-mix burner according to one of Claims 1 to 3, **characterized in that** the heat exchanger tubes (6, 6') of the air heat exchanger have, at least in the middle region, surface structuring for the generation of turbulence and for increasing the heat transition.

5. Oil pre-mix burner according to Claim 4, **characterized in that** the surface structuring of the heat exchanger tubes (6, 6') consists of a spiral grooved structure.

6. Oil pre-mix burner according to one of Claims 1 to 5, **characterized in that**, at the free end of the combustion element (1), a closed-off deflection space (7) is arranged, the inner wall of which delimits the inner space of the combustion element (1) and receives the assigned ends of the heat exchanger tubes (6, 6').

7. Oil pre-mix burner according to Claim 6, **characterized in that** the heat exchanger tubes (6) arranged above the burner surface (2) are connected to the combustion air duct (5), have combustion air from the blower flowing through them, are acted upon on the outside by the flame and issue on the end face into the deflection space (7).

8. Oil pre-mix burner according to either one of Claims 6 and 7, **characterized in that** the heat exchanger tubes (6') arranged below the burner surface (2) emerge from the deflection space (7) on a reference circle having a smaller diameter than the heat exchanger tubes (6) arranged above the burner surface (2) and issue in the opposite end region into a space (8) open towards the central oil injection device (4).

9. Oil pre-mix burner according to one of Claims 1 to 8, **characterized in that** the heat exchanger tubes (6, 6') of the air heat exchanger serve as carriers and/or as fixing for the burner surface (2).

10. Oil pre-mix burner according to one of Claims 1 to 9, **characterized in that** the distance between the heat exchanger tubes (6') of the air heat exchanger which are arranged below the burner surface (2) serves for metering and distributing the oil/air mixture directly below the burner surface (2).

## Revendications

1. Brûleur à prémélange à huile comprenant un élément de brûleur (1), une surface de brûleur (2) sur la surface d'enveloppe extérieure, une chambre de distribution (3) en dessous de la surface de brûleur (2), un dispositif d'injection d'huile central (4) et un canal d'air comburant (5) raccordé à une soufflante disposée en amont, l'élément de brûleur (1) présentant un échangeur de chaleur à air intégré, qui se compose de tubes d'échangeur de chaleur (6, 6') pour le préchauffage de l'air comburant au-dessus et en dessous de la surface de brûleur (2), les tubes d'échangeur de chaleur (6, 6') de l'échangeur de chaleur à air étant répartis au-dessus et en dessous de la surface de brûleur (2) uniformément sur la périphérie de l'élément de brûleur (1) et étant à chaque fois disposés sur un cercle partiel commun, au moins trois tubes d'échangeur de chaleur (6) étant prévus au-dessus de la surface de brûleur (2).

2. Brûleur à prémélange à huile selon la revendication 1,
**caractérisé en ce que** les tubes d'échangeur de chaleur (6, 6') de l'échangeur de chaleur à air s'étendent à chaque fois avec leurs axes parallèles sur la longueur de l'élément de brûleur (1).

3. Brûleur à prémélange à huile selon les revendications 1 ou 2,
**caractérisé en ce que** les extrémités des tubes d'échangeur de chaleur (6, 6') de l'échangeur de chaleur à air sont à chaque fois fixées sur une plaque à bride commune au-dessus et en dessous de la surface de brûleur (2).

4. Brûleur à prémélange à huile selon l'une quelconque des revendications 1 à 3,
**caractérisé en ce que** les tubes d'échangeur de chaleur (6, 6') de l'échangeur de chaleur à air présentent, au moins dans la région centrale, une structuration de surface pour produire des turbulences et augmenter le transfert thermique.

5. Brûleur à prémélange à huile selon la revendication 4,
**caractérisé en ce que** la structuration de surface des tubes d'échangeur de chaleur (6, 6') est constituée d'une structure rainurée spiralée.

6. Brûleur à prémélange à huile selon l'une quelconque des revendications 1 à 5,
**caractérisé en ce qu'**à l'extrémité libre de l'élément de brûleur (1) est disposé un espace de renvoi fermé (7) dont la paroi interne délimite l'espace interne de l'élément de brûleur (1) et reçoit les extrémités associées des tubes d'échangeur de chaleur (6, 6').

7. Brûleur à prémélange à huile selon la revendication 6,
**caractérisé en ce que** les tubes d'échangeur de chaleur (6) disposés au-dessus de la surface de brûleur (2) sont raccordés au canal d'air comburant (5), sont parcourus par l'air comburant provenant de la soufflante, sont sollicités à l'extérieur par la flamme et débouchent du côté frontal dans l'espace de renvoi (7).

8. Brûleur à prémélange à huile selon les revendications 6 ou 7,
**caractérisé en ce que** les tubes d'échangeur de chaleur (6') disposés en dessous de la surface de brûleur (2) débouchent hors de l'espace de renvoi (7) sur un cercle partiel de plus petit diamètre que les tubes d'échangeur de chaleur (6) disposés au-dessus de la surface de brûleur (2), et débouchent, dans la région d'extrémité opposée, dans un espace (8) ouvert vers le dispositif d'injection d'huile central (4).

9. Brûleur à prémélange à huile selon l'une quelconque des revendications 1 à 8,
**caractérisé en ce que** les tubes d'échangeur de chaleur (6, 6') de l'échangeur de chaleur à air servent de support et/ou de fixation pour la surface de brûleur (2).

10. Brûleur à prémélange à huile selon l'une quelconque des revendications 1 à 9,
**caractérisé en ce que** la distance des tubes d'échangeur de chaleur (6') de l'échangeur de chaleur à air disposés en dessous de la surface de brûleur (2) les uns par rapport aux autres sert au dosage et à la distribution directement en dessous de la surface de brûleur (2) du mélange huile/air.
